# EUROPEAN PATENT APPLICATION

(11) **EP 0 869 066 A1**
(43) Date of publication of application: **07.10.1998**
(21) Application number: 97121993.6
(22) Date of filing: 12.12.1997
(51) Int. Cl.: B65D 1/02, C08G 63/181

(54) **A plastic bottle for potable liquids**

(30) Priority: 03.04.1997 KR 9712320
(71) Applicant: Kolon Industries, Inc., Kwacheon-city, Kyunggi-do 427-040 (KR)
(72) Inventor: Cheol, Shin Yong, Seoul (KR); Kim, Young Bum, Suwon-Shi, Kyunggi-Do (KR); Kun, Son Boung, Yongin-Shi, Kyunggi-Do (KR); Sook, Ok Young, Yongin-Shi, Kyunggi-Do (KR)
(74) Representative: Merkle, Gebhard

(57) **Abstract**

The present invention relates to a plastic bottle for potables its transparency, heat-resistance, and UV light barrier are excellent.

A plastic bottle for potables of the present invention is produced by blow molding a copolymer composed of 85 ∼ 99 mol% polyethylene terephthalate and 15 ∼ 1 mol % polyethylene naphtalate, its light transmission is 88 ∼ 92%, UV light barrier is below than 370nm, and haze is 1 ∼ 1.5%, and acetaldehyde content is less than 2 ppm.

## Description

### BACKGROUND OF THE INVENTION

### Field of Invention

The present invention relates to a plastic bottle for potables. More particularly, a plastic bottle for potables its transparency, oxygen barrier and UV light barrier are excellent, and capable of filling high-temperatured contents(hereinafter called "Hot-Fill") without any heat-distortion due to its excellent heat-resistance.

A plastic bottle for potables, being used as container for potables such as alcoholic beverage, carbonated drinks, water and fruit juice drinks and so on, is required to have excellent oxygen and UV light barrier so as to prevent any degeneration of contents along with transparency. It also required to have such levels of heat-resistance to prevent heat-distortion during filling of heated contents which has been sterilized.

### Description of Prior Art

A plastic bottle for potables which is produced mainly by blow molding of polyethylene terephthalate resin has been used up to present. A plastic bottle made of polyethylene terephthalate resin in such method has a problem of heat-distortion during Hot-Fill due to weak heat-resistance.

In order to prevent such heat-distortion, suggestions were made in U.S. Patent No. 4836971 and Japanese Published Patent No. 2-209219 that :
provide neck part of bottle with heat-resistance by the separate neck-crystallizing process before blow molding of body part of bottle.
This method, however, causes high production cost due to complicating process and the productivity gets deteriorated. Also, leaking problem of contents when capping aluminum cap may happen because of subtle distortion based on uneven crystallization in bottle neck. On the other hand, the plastic bottle for potables made of polyethylene terephthalate resin has low transparency due to use of catalyzer during polycondensation process.

Generally speaking, polyethylene terephthalate(hereinafter called "PET") is made from;
(i) esterification reaction between terephthalic acid (TPA) and ethylene glycol (EG), or
(ii) first process of obtaining Bis(β - hydroxyethyl) terephthalate (BMT) by performing exchange reaction between ester derivates of terephathalic acid (DMT) and ethylene glycol, and then second process of polycondensation the obtained compound in high temperature and vacuum.

In aforesaid two producing methods normally, pertinent catalyzers are used respectively, And these catalyzers are the main reason to make the final product turbid.
It is known that phosphoric compound is used for the purpose of elevating transparency for polyester sorts, especially PET. Adding this phosphoric compound is construed that not only prevents heat-decomposition by reacting residual catalyzer in reaction system and phosphoric compound, but also transparentizes the final polymer by dissolving to polymer insoluble particle originated from residual catalyzer to polymer.
However, It is well known truth that adding plenty of such phosphoric compound in order to improve the transparency, makes the polycondensation catalyzer inert due to the effect of it. Additionally, in such case of adding plenty of phosphoric compound, there will be a problem of deteriorating the melting temperature of obtained polymer based on the by-reaction such as by-product of Diethylene glycol(DEG). Moreover, the effectiveness of transparency improvement will not be sufficient enough, even though plenty of phosphoric compound had been added.

On the other hand, in Japanese published patent No. 50-1494389, a method of adding alkali metals compound has been disclosed in order to restrain the obtained polymer from by-product of Diethylene glycol and deterioration of glass transition temperature(Tg). Adding alkali metals compound however, produces subtle particles and deteriorates the transparency on the contrary.

A plastic bottle made of polyethylene terephthalate resin is not good for a container of UV-sensitive material such as alcolholic beverage, vitamine drinks and fruit juice drinks because of the transmission of UV light (over than 320nm) through the bottle.

For the purpose of solving this problem, a suggestion was made that :
produce a plastic bottle of potables by adding UV absorbers made from some chemical substances of organic system or inorganic system.
But, there is some worry in this suggestion that the taste or odor of contents could be degenerated by migration of UV absorbers to the contents of bottle.

Another suggestion to color the plastic bottle in order to cut-off the UV light were made, but in this case, customers could not estimate the color of content correctly.
Since oxygen barrier of plastic bottle made of polyethylene terephthalate resin is not so enough, there is a problem of deteriorating the freshness of contents.
As 1 day oxygen permeability of a 0.5ℓ capacity polyethylene terephthalate bottle is 0.125 ∼ 0.170 cc, the oxygen barrier is not in favorable level. High oxygen barrier is required as the smaller capacity of plastic bottle for potables decreases, the more contact area of contents has.

In order to improve the aforementioned several problems, on the other hand, a plastic bottle for potables fabricated by blowing polyethylene naphtalate resin has been used to some extent. In case, polyethylene naphtalate resin is used for producing plastic bottle, the heat-resistance, processability, transparency and mechanical properties would be excellent. But, price of polyethylene naphtalate resin is much expensive than that of polyethylene terephthalate resin, it could not be commercialized.

### SUMMARY OF THE INVENTION

The present invention relates to a plastic bottle for potables. More particularly, a plastic bottle for potables its transparency, oxygen barrier and UV light barrier are excellent, and capable of filling high-temperatured contents without any heat-distortion due to excellent heat-resistance.

The plastic bottle for potables of the present invention is composed of copolymer of polyethylene terephthalate and polyethylene naphtalate its glass transition temperature(Tg) is about 85°C or more respectively, the light transmission is 88 ∼ 92%, UV light barrier is below than 370nm, and haze is 1 ∼ 1.5%. Preferably, the acetaldehyde content of the plastic bottle for potables of the present invention is less than 2 ppm, 1 day oxygen permeability is 0.10 ∼ 0.12 cc, and the Hot-Fill is possible to the temperature of 85 ∼ 90°C.

### DESCRIPTION OF THE PREFERRED EMBODIMENT

Detailed illustration on the present invention will be followed hereinafter.

The plastic bottle for potables of the present invention is produced by blow molding the copolymer of polyethylene terephthalate and polyethylene naphtalate. Aforesaid copolymer could be prepared by reacting the mixture of Dimethyl-2,6-Naphthalenedicarboxylate and Dimethylterephthlate with Ethylene glycol. More particularly, prepare low molecular weight oligomer by the transesterification of the aforesaid monomer under such catalyzer as Zinc, Manganese, Cobalt, Magnesium and Calcium. Then produce copolymer of polyethylene terephthalate-polyethylene naphtalate which has desired molecular, weight by polycondensation reacting the low molecular weight oligomer under vacuum (less than 1 torr) and 270 ∼ 300°C temperature along with such polymerization catalyzer as Antimony and Germanium.

In the present invention though, the composition ratio of polyethylene terephthalate and polyethylene naphtalate of the said copolymer would not be limited specifically, but 85 ∼ 99 mol% polyethylene terephthalate and 15 ∼ 1 mol % polyethylene naphtalate is more desirable. If the polyethylene naphtalate is contained more than 15 mol%, it is not economical. And if the polyethylene naphtalate is less than 1 mol%, the properties of blow molded plastic bottle could be deteriorated.
Now, blow molding a plastic bottle with the copolymer resin of polyethylene terephthalate-polyethylene naphtalate which has been prepared by the aforesaid method. The plastic bottle of the present invention could be produced by blow molding with normal stretch-blow molding machine because it adopts aforesaid copolymer resin. According to the present invention, Neck Crystallization, the indispensable process during blow molding the plsatic bottle with conventional polyethylene terephthalate resin could be curtailed. Also, the heat setting blowing process for body part of the plastic bottle could be simplified from conventional 2 steps to 1 step. That is to say, the plastic bottle of the present invention could be produced by 1 step of blowing process at 100 ∼ 150 °C without Neck Crystallization. The productivity of the present invention is doubled comparing to the conventional method of blow molding the plastic bottle through 2 steps of heat setting blowing process after the Neck Crystallization using polyethylene terephthalate resin.

Light transmission of the plastic bottle in the present invention, produced in the aforesaid method, is 83 ∼ 90% and transparency is excellent as the haze is 1 ∼ 1.5%.

Though glass transition temperature(Tg) of the copolymer composing the plastic bottle of the present invention is about 85°C, the heat-resistance of plastic bottle of the present invention is enough to Hot-Fill 85 ∼ 90°C conntents due to the excellent heat-resistance of polyethylene naphtalate component.

Besides, the plastic bottle of the present invention could cut off below than 370 nm UV light, and 1 day oxygen permeability of 0.5ℓ capacity basis is low enough as 0.10 ∼ 0.12 cc to prevent degeneration of the plastic bottle contents.

Moreover, as the Acetaldehyde content is less than 2 ppm, it is possible to minimize the degeneration of contents' taste even the Acetaldehyde transferred to filled contents.

Every properties of the plastic bottle as illustrated above are evaluated by following methods.

### • Hot-Fill Temperaturs (°C)

A) Pour normal temperature of distilled water to a bottle as it overflowed at normal temperature, then measure the capacity.
B) Pour 85 ∼ 90°C heated water to bottle as it overflowed, and cap the bottle.
C) After 1 hour elapse, remove the heated water from the bottle, then measure the capacity of the bottle by pouring distilled water to that bottle.
D) Measure any leakage, change of exterior appearance, and change of inside or outside diameter of neck.

If the results of aforesaid measurements meet below, the Hot-Fill temperature is evaluated as satisfies 85 ∼ 90°C:
- no leakage,
- no change in exterior appearance, and
- less than 1% change of inside or outside diameter of neck.

### • Haze and Light Transmission (%)

After cutting certain part of the bottle, measure the Haze and Light Transmission by [Haze-Meter,NDH-300A, a product of **Japan Electronic Co.**] at normal temperature.

### • UV light barrier (%)

After cutting certain part of the bottle, measure the UV light barrier by HP 8452 UV-VIS spectro photometer at normal temperature.

### • Oxygen Permeability(cc/ 1 day)

Measure the Oxygen Permeability by Oxtran 2/20, MOCON at 25°C, 15 RH, 100% oxygen condition.

### • Acetaldehyde(ppm)

Measure by ASTM D4509 method.

The present invention will be discussed more particularly through following examples and comparative examples. The present invention however, does not limited only to the examples.

### EXAMPLE 1

Prepare low viscosity copolymer by next 3 steps ;
- pour Dimethyl-2,6-Naphthalenedicarboxylate 10 mol, Dimethyl terephthlate 190 mol, and Ethylene glycol 400 mol into reactor,
- remove over than 98% theoretical quantity of methanol occured during transesterification reaction under Maganese acetate 400 ppm at 230°C, and
- polymerize by depressurizing below than 1 torr at 285°C after added Antimony Oxide 300 ppm and phosphorides stabilizer 400 ppm.
Then prepare the copolymer of polyethylene terephthalate-polyethylene naphtalate, its inherent viscosity is about 0.8 dl/g and glass transition temperature is 85°C, by 10 hours polymerization the prepared low viscosity copolymer at 210°C under vacuum. And after dried up the produced copolymer below than 50 ppm of moisture at 150°C, then produce a plastic bottle for potables its capacity is 0.5ℓ and weight is 31g, by blow molding with a normal stretch-blow molding machine. Evaluation results of every properties of the produced plastic bottle for potables are shown in Table 1.

### EXAMPLE 2

Prepare low viscosity copolymer by next 3 steps ;
- pour Dimethyl-2,6-Naphthalenedicarboxylate 16 mole, Dimethyl terephthlate 180 mol, and Ethylene glycol 400 mol into reactor,
- remove over than 98% theoretical quantity of methanol occured during transesterification reaction under Maganese acetate 400 ppm at 230°C, and
- polymerize by depressurizing below than 1 torr at 285°C after added Antimony Oxide 300 ppm and phosphorides stabilizer 400 ppm.
Then prepare the copolymer of polyethylene terephthalate-polyethylene naphtalate, its inherent viscosty is about 0.8dl/g and glass transition temperature is 85°C, by 10 hours polymerization the prepared low viscosity copolymer at 210°C under vacuum. And after dried up the produced copolymer below than 50 ppm of moisture at 150°C, then produce a plastic bottle for potables its capacity is 1.0ℓ and weight is 45g, by blow molding with a normal stretch-blow molding machine. Evaluation results of every properties of the produced plastic bottle for potables are shown in Table 1.

### EXAMPLE 3

Prepare low viscosity copolymer by next 3 steps ;
- pour Dimethyl-2,6-Naphthalenedicarboxylate 20 mol, Diemethyl terephthlate 170 mol, and Ethylene glycol 400 mol into reactor,
- remove over than 98% theoretical quantity of methanol occured during transesterification reaction under Maganese acetate 400 ppm at 230°C, and
- polymerize by depressurizing below than 1 torr at 285°C after added Antimony Oxide 300 ppm and phosphorides stabilizer 400 ppm.
Then prepare the copolymer of polyethylene terephthalate-polyethylene naphtalate, its inherent viscosity is about 0.8 dl/g and glass transition temperature is 87°C, by 10 hour polymerization the prepared low viscosity copolymer at 210°C with vacuum. And after dried up the produced copolymer below than 50 ppm of moisture at 150°C, then produce a plastic bottle for potables its capacity is 1.5ℓ and weight is 61g, by blow molding with a normal stretch-blow molding machine. Evaluation results of every properties of the produced plastic bottle for potables are shown in Table 1.

### COMPARATIVE EXAMPLE 1

After dried up homopolymer of polyethylene terephthalate below than 50 ppm of moisture at 150°C, then produce a plastic bottle for potables its capacity is 0.5ℓ and weight is 28g, by blow molding with a stretch-blow molding machine for heat-resistant bottle. Evaluation results of every properties of the produced plastic bottle for potables are shown in Table 1.

### COMPARATIVE EXAMPLE 2

After dried up homopolymer of polyethylene terephthalate below than 50 ppm of moisture at 150°C, then produce a plastic bottle for potables its capacity is 1.0ℓ and weight is 45g, by blow molding with a stretch-blow molding machine for heat-resistant bottle. Evaluation results of every properties of the produced plastic bottle for potables are shown in Table 1.

### COMPARATIVE EXAMPLE 3

After dried up homopolymer of polyethylene terephthalatethe below than 50 ppm of moisture at 150°C, then produce a plastic bottle for potables its capacity is 1.5ℓ and weight is 66g, by blow molding with a stretch-blow molding machine for heat-resistant bottle. Evaluation results of every properties of the produced plastic bottle for potables are shown in Table 1.

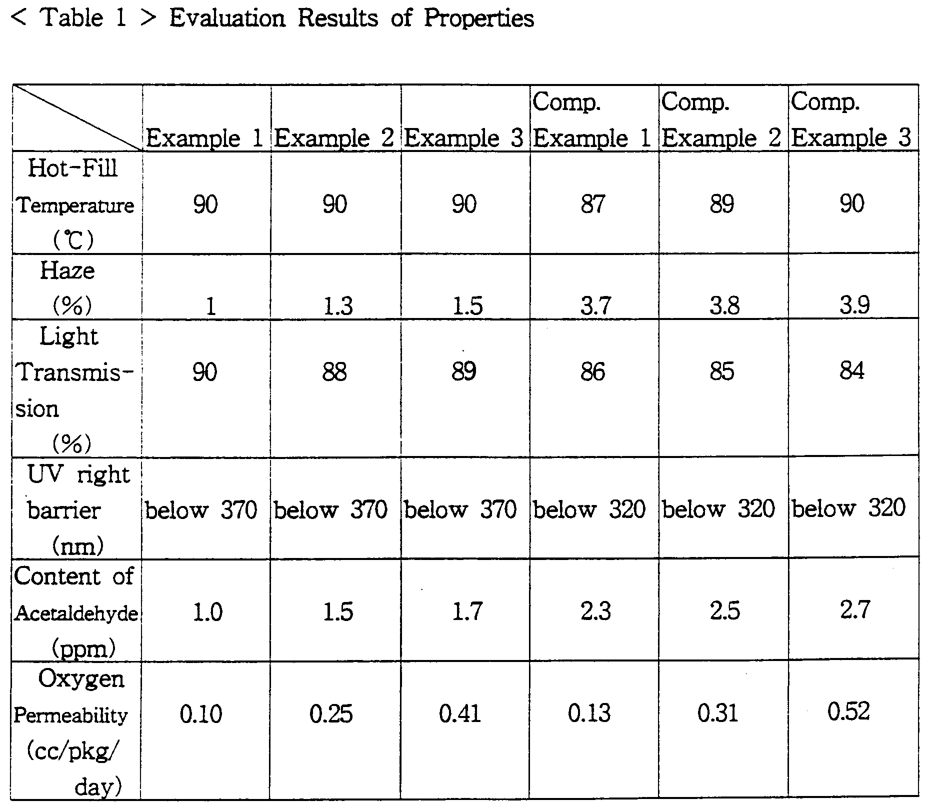

## Claims

1. A plastic bottle for potables, said plastic bottle being characterized by a composition of a copolymer of polyethylene terephthalate and polyethylene naphthalate, which copolymer has a glass transition temperature (Tg) of 85°C or more, said plastic bottle has a light transmission of 88-92 %, a UV light barrier of below than 370 nm, and a Haze of 1-1.5 %.

2. The plastic bottle for potables according to claim 1, characterized in that said copolymer is composed of 85-99 mol% polyethylene terephthalate and 15-1 mol% polyethylene naphthalate.

3. The plastic bottle for potables according to claim 1 or 2, characterized in that the acetaldehyde content of said plastic bottle is less than 2 ppm.

4. The plastic bottle for potables according to any of claims 1-3, characterized in that the Hot-Fill of said plastic botttle is possible to the temperature of 85-90°C.

5. The plastic bottle for potables according to any of claims 1-4, characterized in that said plastic bottle has a 0.5 l basis 1 day oxygen permeability of 0.10-0.12 cm³.
